**Europäisches Patentamt**

**European Patent Office**

**Office européen des brevets**

(19)

(11) Veröffentlichungsnummer: **0 019 071**
**A1**

(12) ## EUROPÄISCHE PATENTANMELDUNG

(21) Anmeldenummer: **80101746.8**

(22) Anmeldetag: **02.04.80**

(51) Int. Cl.³: **F 24 J 3/02**

(30) Priorität: **03.04.79 DE 2913333**
**01.04.80 DE 3012689**

(43) Veröffentlichungstag der Anmeldung:
**26.11.80 Patentblatt 80/24**

(84) Benannte Vertragsstaaten:
**AT BE FR GB NL SE**

(71) Anmelder: **Landes, Klaus, Prof. Dr.**
**Melchiorstrasse 23**
**D-8000 München 72(DE)**

(72) Erfinder: **Landes, Klaus, Prof. Dr.**
**Melchiorstrasse 23**
**D-8000 München 72(DE)**

(74) Vertreter: **Popp, Eugen Dr. et al,**
**Patentanwälte Dipl.-Ing. Dipl.Wirt.-Ing. Dr. Eugen Popp**
**& Dipl.-Phys. Wolf E. Sajda Maria-Theresia Strasse 30**
**D-8000 München 80(DE)**

(54) **Erdkollektor für Wärmepumpen und Verfahren zum Betriebe dieses Erdkollektors.**

(57) Die Erfindung betrifft einen Erdkollektor für Wärmepumpen, der durch die Verwendung von mindestens einem etwa vertikal ins Erdreich getriebenen, plattenförmigen Wärmetauscherelement (12) gekennzeichnet ist, an dem zur Zu- und Ableitung eines Wärmetauschermediums mindestens eine Rohrleitung (10) oder dergleichen angebracht ist, die sich im wesentlichen über die gesamte Länge des Wärmetauscherelementes (12) erstreckt. Vorzugsweise sind mehrere derartig ausgebildete Wärmetauscherelemente im Abstand voneinander im Erdreich angeordnet und miteinander fluidverbunden, so daß ein Wärmetauschermediumkreislauf zwischen der Wärmepumpe und den Wärmetauscherelementen (12) entsteht.

Die Verwendung der beschriebenen Wärmetauscherelemente ermöglicht die Schaffung eines Erdkollektors in bautechnisch denkbar einfacher Weise sowie mit hohem Wirkungsgrad, wobei insbesondere in einfacher Weise große Tiefen augenutzt werden können.

Zur optimalen "Bedienung" des Wärmespeichers "Erde" wird an kalten Tagen in die Wärmetauscherelemente (12) ein Wärmetauschermedium mit bezogen auf die Temperatur des Erdreichs niedrigerer Temperatur und an wärmeren Tagen ein Wärmetauschermedium höherer Temperatur eingeleitet, wobei die Erwärmung des Wärmetauschermediums durch Überschußwärme (Sonne, Luft) erfolgt.

*Fig. 1*

Erdkollektor für Wärmepumpen
und Verfahren zum Betriebe dieses Erdkollektors

Die Erfindung betrifft einen Erdkollektor für Wärmepumpen und ein Verfahren zum Betriebe eines derartigen Erdkollektors.

Vor dem Hintergrund zunehmender Verknappung fossiler
Brennstoffe und der ungelösten Problematik nuklearer
Energiegewinnung gewinnen Überlegungen zur Einsparung wertvoller Primärenergie immer mehr an Bedeutung.
Dies betrifft vor allem den Verbrauch hochwertiger
Primärenergie zum Zwecke der Gebäudeheizung (in der
Bundesrepublik z.Z. ca. 40 % des Gesamtenergieverbrauchs). Der stets zunehmende Energiebedarf zwang,
Mittel und Wege zu finden, natürlichen Energieträgern,
wie das Erdreich, Wasser oder die Luft, Wärme- bzw.
Energie zu entziehen. Die diesbezüglich angestellten
Überlegungen führten zur Entwicklung der sog. Wärmepumpen.

Unter den konkurrierenden natürlichen Energieträgern
besitzt das Erdreich wesentliche Vorteile. Die Temperatur des Erdreiches ist vergleichsweise im Tages- und

- 2 -

Jahresablauf wenig veränderlich und liegt hoch bezogen auf die Gebäudetemperaturen, insbesondere je tiefer man unter die Erdoberfläche geht.

Zur Ausnutzung der Erdwärme werden bei den herkömmlichen Wärmepumpensystemen Wärmetauscher-Rohrschlagen im Erdreich verlegt, und zwar einlagig in ca. 1 bis 2 m Tiefe im Abstand von etwa 0,5 bis 1,0 m auf einer Fläche, die etwa der 3- bis 5-fachen zu beheizenden Wohnfläche entspricht. Die Nachteile der bekannten Systeme sind offenkundig. Das Ausheben des Erdreichs, das Verlegen der Rohrschlagen und das Zuschütten der ausgehobenen Stellen ist selbst bei Neubauten unter günstigen Umständen mit großem Aufwand verbunden. Bei altem Baumbestand und angelegten Gärten ist dieses Verfahren meist unmöglich oder unzumutbar. Weiterhin besteht Gefahr, daß beim Zuschütten der ausgehobenen Stellen und beim nachfolgenden Verfestigen des Erdreiches die Rohrschlagen beschädigt werden. Es entstehen Leckstellen, Haarrisse, Knickstellen, die später nur mit erheblichem Aufwand lokalisierbar und behebbar sind. Insbesondere können derartige Schäden nicht durch einfaches Abklemmen der beschädigten Rohrabschnitte unwirksam gemacht werden.

Je tiefer man in das Erdreich eindringt, desto höher ist die Erdtemperatur. Ferner wird mit zunehmender Tiefe die Temperaturänderungskurve immer flacher. Die Erdtemperatur bleibt unabhängig vom Jahreswechsel nahezu gleich. Um diese Vorteile ausnutzen zu können, müßten die Rohrschlagen der bekannten Wärmepumpensysteme sehr tief, etwa 2,50 bis 5 m tief unter der Erdoberfläche verlegt werden. Der bautechnische Aufwand ist dann aber nicht mehr vertretbar.

Der vorliegenden Erfindung liegt daher die Aufgabe zugrunde, einen Erdkollektor für Wärmepumpen zu schaffen, der ohne großen bautechnischen Aufwand relativ tief in das Erdreich eingebracht werden kann und sich durch einen hohen Wirkungsgrad auszeichnet.

Es ist ferner Aufgabe der vorliegenden Erfindung, ein Verfahren zum Betriebe eines derartigen Erdkollektors zu schaffen, das eine optimale "Bedienung" des Wärmespeichers "Erde" erlaubt.

Hinsichtlich des Erdkollektors wird die gestellte Aufgabe gelöst durch die Verwendung von mindestens einem etwa vertikal ins Erdreich getriebenen, plattenförmigen Wärmetauscherelement, an dem zur Zu- und Ableitung eines Wärmetauschermediums mindestens eine Rohrleitung oder dergleichen angebracht ist, die sich im wesentlichen über die gesamte Länge des Wärmetauscherelementes erstreckt.

Hinsichtlich des Verfahrens wird die gestellte Aufgabe dadurch gelöst, daß an kalten Tagen in die Wärmetauscherelemente ein Wärmetauschermedium mit bezogen auf die Temperatur des Erdreichs niedrigerer Temperatur und an wärmeren Tagen ein Wärmetauschermedium höherer Temperatur eingeleitet wird, wobei die Erwärmung des Wärmetauschermediums durch Überschußwärme erfolgt.

Der erfindungsgemäß ausgebildete Erdkollektor läßt sich unter Anwendung erprobter Techniken ohne großen Aufwand in das Erdreich treiben. Die Wärmetauscherelemente können in eine Tiefe bis zu etwa 30 m in das Erdreich getrieben werden. Die Einbringung der Wärmetauscherelemente in das Erdreich ist kurzfristig durchführbar, und zwar durch

- 4 -

- Einrammen
- Einschlemmen
- Einrütteln
- Eingraben, oder
- Einbringen in vorher erstellte Hohlräume,
  z.B. Bohrlöcher, Schlitze, die dann mit gut
  wärmeleitendem Material ausgefüllt werden.

Eine Beschädigung der Grundstücksoberfläche durch die Einbringung der Wärmetauscherelemente ist im wesentlichen vermieden. Es können mit den erfindungsgemäß ausgebildeten Wärmetauscherelementen Tiefen erreicht werden, in denen sich bereits das Grundwasser befindet. Das Grundwasser ist ein unerschöpfliches Wärmereservoir, dessen Ausnutzung die erfindungsgemäßen Wärmetauscherelemente im hervorragenden Maße erlauben. Die großflächige Ausbildung des Wärmetauscherelements garantiert für einen wirkungsvollen Wärmeentzug. Der Wirkungsgrad wird dadurch gegenüber bekannten Systeme erheblich erhöht.

An kalten Tagen wird der Erde Wärme entzogen, die zur Heizung von Räumen oder Gebäuden verwendet wird. An wärmeren Tagen, insbesondere während der Frühjahrs-, Sommer- und Herbstzeit wird in der Regel keine Heizwärme benötigt. Aus diesem Grunde sind Überschußwärmen vorhanden, die in der Regel ungenutzt bleiben. Diese Überschußwärmen werden erfindungsgemäß mittels des Wärmetauschermediums in die Wärmetauscherelemente eingeleitet, wodurch eine gewisse "Aufheizung" des die Wärmetauscherelemente umgebenden Erdreichs bewirkt wird. Das Erdreich speichert die zugeführte Wärme im Bereich der Wärmetauscherelemente realtiv lange, so daß an kalten Tagen, insbesondere während der Winter-

- 5 -

zeit dem Erdboden erhöht Wärme entzogen werden kann.
Die Verluste zugeführter Überschußwärme sind relativ
gering.

Die an warmen Tagen bzw. während der warmen Jahreszeit dem Erdreich zugeführte Wärme ist insbesondere
ein "Puffer" für einen Spitzenbedarf während einer
langen Frostperiode.

Vorzugsweise wird an wärmeren bzw. warmen Tagen Luft-
oder durch unmittelbare Sonneneinwirkung (Sonnenkollektoren) erwärmtes Wärmetauschermedium in die Wärmetauscherelemente eingeleitet. Besonders wirkungsvoll
ist also die Kombination des erfindungsgemäßen Erdkollektors mit Sonnenkollektoren, durch die an Sonnentagen das Wärmetauschermedium zur Erwärmung strömt,
bevor es in die Wärmetauscherelemente eingeleitet wird.
Dadurch erhält man eine "Aufheizung" der Erde auch in
Tiefen, die von der Sonnenstrahlung weitgehend unbeeinflußt bleiben (unterhalb von 1,5 m Tiefe).

Die Steuerung der Einleitung von Wärmetauschermedien
niedrigerer oder höherer Temperatur in die Wärmetauscherelemente erfolgt zweckmäßigerweise in Abhängigkeit von der Außen- bzw. Lufttemperatur. Sie kann auch
in Abhängigkeit von einem auf die Strahlungsintensität
der Sonne ansprechenden photoelektrischen Elemente erfolgen.

Da die Anschlüsse an die Rohrleitung des Wärmetauscherelements vorzugsweise im Bereich des oberen Endes desselben angeordnet ist, ist eine einfache Lokalisierung
von Leckschäden, Verstopfungen oder dergleichen sowie
eine einfache Überbrückung schadhafter Wärmetauscher-

- 6 -

elemente möglich.

Ferner ist die Demontage der erfindungsgemäß ausgebildeten Wärmetauscherelemente denkbar einfach. Sie lassen sich durch ein Hebezeug in einfacher Weise wieder aus dem Erdreich herausziehen.

Vorteilhafte Ausbildungen des erfindungsgemäßen Erdkollektors sind in den Unteransprüchen näher beschrieben.

Im folgenden wird die Erfindung anhand von bevorzugten Ausführungsbeispielen, die in den anliegenden Zeichnungen schematisch dargestellt sind, näher erläutert.

Es zeigt

Fig. 1     eine erste Ausführungsform eines Wärmetauscherelements gem. vorliegender Erfindung in perspektivischer Ansicht,

Fig. 2     einen Schnitt längs Linie II-II in Fig. 1,

Fig. 3     einen Schnitt längs Linie III-III in Fig. 1,

Fig. 4     eine abgewandelte Ausführungsform eines Wärmetauscherelementes im Querschnitt,

Fig. 5     eine weiter abgewandelte Ausführungsform des Wärmetauscherelements in perspektivischer Ansicht,

Fig. 6    eine rasterförmige Anordnung von erfindungsgemäß ausgebildeten Wärmetauscherelementen
          im Erdreich (Erdkollektor), und

Fig. 7    eine Anlage zum Betriebe eines Erdkollektors
          für Wärmepumpen stark vereinfacht.

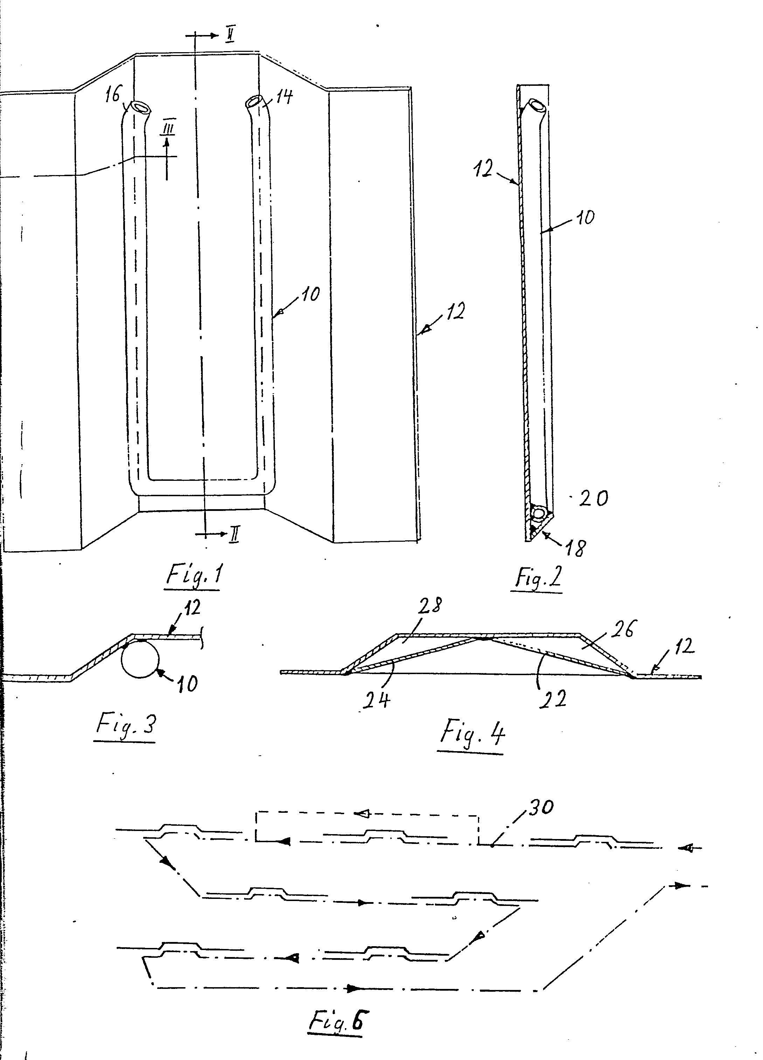

Das in den Fig. 1 bis 3 dargestellte Wärmetauscherelement besteht aus einem Tafelprofil 12 aus Metall und
einem daran angeschweißten U-förmigen Rohr 10, durch
das ein Wärmetauschermedium hindurchgeleitet wird. Als
Wärmetauschermedium dient vorzugsweise Wasser bzw.
eine korrosionsverhindernde Sole. Das in den Fig. 1
bis 3 dargestellte Tafelprofil ist für den Bau von
Spundwänden allgemein bekannt. Diese bestehen aus
rostfreiem Stahl mit hoher mechanischer Festigkeit und
ausreichend großem Wärmeleitvermögen. Wie insbesondere
aus Fig. 3 erkennbar ist, sind die Rohrschenkel des
U-förmigen gebogenen Rohres 10 im Bereich der Innenecken des Tafelprofils angeschweißt. Auf diese Art und
Weise können die Rohrschenkel mittels zweier sich über
die gesamte Länge der Rohrschenkel erstreckender
Schweißnähte an dem Tafelprofil angeschweißt werden.
Es entstehen somit zwei "Wärmebrücken", mit der Folge,
daß ein verbesserter Wärmeaustausch zwischen dem Tafelprofil und dem Wärmetauschermedium erhalten wird. Das
Rohr 10 besteht aus einem Material, das sich durch
großes Wärmeleitvermögen und insbesondere auch Korrosionsbeständigkeit auszeichnet. Es kann z.B. aus Edelmetall oder verzinktem Stahl bestehen.

Die Dicke des Tafelprofils ist für den Wärmeaustausch
nicht entscheidend. Entscheidend für den Wärmeaustausch ist die Projektionsfläche. Das Tafelprofil muß nur so dick sein, wie es die Festigkeit zur Einbringung des Profils in das Erdreich fordert.

Es ist jedoch auch denkbar, das Rohr 10 schlangenförmig zu biegen sowie an beiden Seiten des Tafelprofils 12 ein oder mehrere Rohre anzubringen. Die Anschlüsse des Rohres 10 sind im Bereich des oberen Endes des Tafelprofils 12 angeordnet, so daß sie auch dann leicht zugänglich sind, wenn das Wärmetauscherelement in das Erdreich eingebracht worden ist.

In Fig. 2 ist eine spezielle Ausbildung einer Schneide 18 dargestellt. Die Schneide 18 ist durch den unteren Rand des Tafelprofils 12 und einen im spitzen Winkel an den unteren Rand des Tafelprofils 12 angesetzten Streifen 20 gebildet. Es handelt sich hierbei um einen Streifen aus äußerst widerstandsfähigem Material. Die Schneide 18 dient zum leichteren Eintreiben des Wärmetauscherelements in das Erdreich sowie insbesondere zum Schutz des Rohres 10 beim Eintreiben.

In Fig. 1 ist die Schneide 18 der besseren Übersicht wegen weggelassen.

In Fig. 4 ist eine abgewandelte Ausführungsform eines Wärmetauscherelementes dargestellt. Das Rohr 10 ist durch Zellen 26, 28 ersetzt. Durch diese Zellen wird das Wärmetauschermedium hindurchgeleitet. Die Zellen 26, 28 werden durch einfaches Überdecken der Innenecken des Tafelprofils 12 mittels Platten 22, 24 erhalten. Am unteren Ende des Tafelprofils 12 sind die beiden Zellen 26, 28 fluidverbunden. Im Bereich des

- 9 -

oberen Endes des Tafelprofils 12 befinden sich Anschlüsse entsprechend den Anschlüssen 14, 16 in Fig.1.
Die Platten 22, 24 sind am Tafelprofil 12 angeschweißt.
Zur Erhöhung der Steifigkeit der Platten 22, 24 können
innerhalb der Zellen Versteifungsstege oder dergleichen
angeordnet sein.

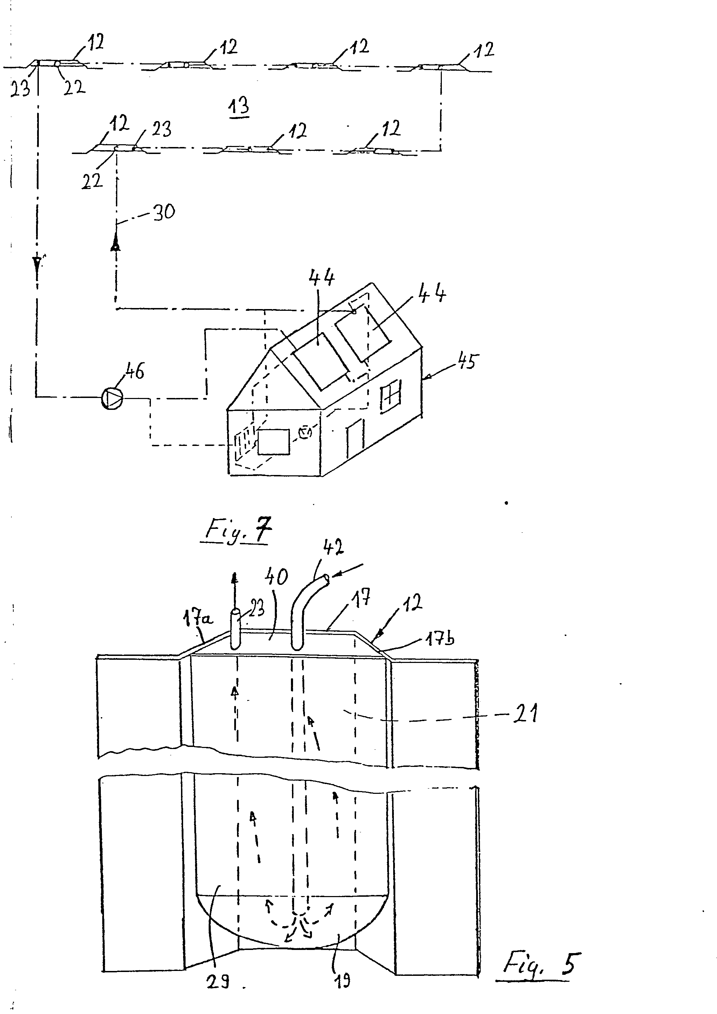

In Fig. 5 ist ein weiteres besonders bevorzugtes Wärmetauscherelement schematisch dargestellt, das aus einem
Tafelprofil 17 und einer die Schenkel 17a und 17b des
Tafelprofils verbindenden Abdeckplatte besteht, die am
unteren Ende des Tafelprofils mit diesem unter Bildung
einer Schneide 19 fluiddicht verbunden ist. Am oberen
Ende des Tafelprofils 17 ist der Raum zwischen diesem
und der Abdeckplatte 29 durch einen Deckel 40 abgeschlossen, so daß zwischen der Abdeckplatte 29 und dem
Tafelprofil 17 eine Kammer 21 entsteht, die von einem
Wärmetauschermedium durchströmt wird. Die Einleitung
des Wärmetauschermediums erfolgt über einen durch den
Deckel 40 hindurchtretenden Kunststoffschlauch 42, der
bis nahe an das untere Ende der Kammer 21 reicht, so
daß das Wärmetauschermedium am unteren Ende des Wärmetauscherelements bzw. der Kammer 21 austritt. Von dort
strömt das Wärmetauschermedium innerhalb der Kammer 21
nach oben und verläßt diese über einen Auslaß 23 (Rohrstutzen oder dergleichen). Auf dem Weg durch die Kammer
21 nimmt das Wärmetauschermedium entweder dem Erdboden
entzogene Wärme auf oder gibt Eigenwärme an den Erdboden ab. Dadurch, daß die Einführung des Wärmetauschermediums durch ein Kunststoffrohr bzw. einen Kunststoffschlauch 42 erfolgt, findet zwischen dem im Schlauch 43
zugeführten Wärmetauschermedium und dem von unten nach
oben in der Kammer 21 hochsteigenden Wärmetauschermediums so gut wie kein Wärmeaustausch statt. Statt des Kunststoffschlauches 42 kann natürlich auch ein Rohr aus einem anderen wärmeisolierenden Material verwendet werden.

In Fig. 6 ist schematisch eine Anordnung der beschriebenen Wärmetauscherelemente zur Bildung eines größeren Erdkollektors im Erdreich dargestellt. Die Wärmetauscherelemente sind dabei vorzugsweise versetzt zueinander angeordnet, so daß ein gleichmäßiger Wärmeentzug des Erdreichs erzielbar ist. Die strichpunktierte Linie 30 kennzeichnet die Strömungsrichtung des Wärmetauschermediums und die Fluidverbindung zwischen den einzelnen Wärmetauscherelementen.

In gestrichelten Linien ist die Überbrückung eines Wärmetauscherelements, das z.B. defekt ist, dargestellt. Eine Überbrückung defekter Wärmetauscherelemente ist aufgrund der Anordnung der Anschlüsse 14 und 16 im Bereich des oberen Endes der Wärmetauscherelemente ohne besonderen Aufwand möglich.Die Länge der Wärmetauscherelemente kann abhängig vom jeweiligen Gelände und Zusammensetzung des Erdreiches bis zu 30 m betragen. Die beschriebenen Wärmetauscherelemente lassen sich durch Schlagen oder Rütteln relativ einfach in das Erdreich treiben. Natürlich ist auch eine horizontale oder schräge Verlegung denkbar, falls das Erdreich nur eine solche zuläßt. An den Anschlüssen 14, 16 werden in der Regel im Erdreich in geringer Tiefe verlegte isolierte Rohre oder Schläuche angeschlossen, die mit einem im Gebäude befindlichen Teil einer Heizanlage verbunden sind. Die Rohre 10 der einzelnen Wärmetauscherelemente werden von einem Wärmetauschermedium durchströmt, dessen Temperatur unter der des
Erdreichs bzw. des Grundwassers liegt. Die großen
Flächen der Tafelprofile gewährleisten eine gute Wärmeaufnahme und Weitergabe an das Wärmetauschermedium,
das vorzugsweise Wasser ist. Die Verwendung von
Wasser als Wärmetauschermedium ist äußerst umweltfreundlich, da ein Austreten an Leckstellen keinerlei
nachteilige Schäden im Erdreich hinterläßt.

Durch geeignete Wahl der Raster bzw. der Anordnung
der Wärmetauscherelemente im Erdreich sowie der Längen der Wärmetauscherelemente kann auch bei fehlendem
Grundwasserkontakt selbst auf kleinen Flächen eine hohe
Wärmemenge dem Erdreich entzogen werden. Da die erfindungsgemäßen Wärmetauscherelemente vertikal im Erdreich verlegt werden, eignen sich diese insbesondere
auch für kleinste Grundstücksflächen.

Zu Fig. 2 ist noch zu sagen, daß der untere etwa
waagrecht verlaufende Teil des Rohres 10 unmittelbar
hinter der Schneide 18, d.h. zwischen dem angesetzten
Streifen 20 und dem unteren Rand des Tafelprofiles 12
angeordnet ist. Dadurch erfährt die Schneide 18 eine
zusätzliche Erhöhung der Festigkeit bzw. Steifigkeit.
Der waagrechte Teil des Rohres 10 ist vorzugsweise sowohl am Tafelprofil 12 als auch an der dem Tafelprofil
12 zugekehrten Seite des Streifens 20 angeschweißt.

Diese Ausbildung hat schließlich noch den Vorteil, daß
beim Herausziehen eines Wärmetauscherelements aus dem
Erdreich der Streifen 20 nicht als das Herausziehen

- 12 -

behindernder Widerhaken wirkt. Bei der Ausführungsform gemäß Fig. 4 kann der die Zellen 26, 28 fluidverbindende Abschnitt ebenfalls innerhalb der Schneide 18 angeordnet sein. Vorzugsweise wird der durch den Streifen 20 und den unteren Rand des Tafelprofils 12 eingeschlossene Zwickel durch ein Abdeckblech bzw. eine Abdeckplatte verschlossen, so daß eine waagrecht verlaufende Zelle entsteht.

In Fig. 7 bilden die rasterförmig angeordneten Wärmetauscherelemente (Tafelprofile 12) einen Erdkollektor 13. Der Einzugsbereich eines Wärmetauscherelementes von ca. 7 m Länge und 0,80 m Breite ist eine "Säule" mit etwa ovalem Querschnitt mit einem mittleren Durchmesser von etwa 4 m. Dieser Einzugsbereich muß bei der Anordnung der Wärmetauscherelemente im Erdreich berücksichtigt werden.

Die strichpunktierte Linie 30 kennzeichnet in Fig. 7 entsprechend Fig. 6 die Strömungsrichtung des Wärmetauschermediums und die Fluidverbindung zwischen den einzelnen Wärmetauscherelementen sowie von und zu einem Sonnenkollektor 44, der z.B. auf dem Dach eines Hauses 45 angeordnet ist. Die Umwälzung des Wärmetauschermediums erfolgt durch eine Pumpe 46, die elektrisch- oder dieselangetrieben sein kann. Der besseren Übersicht wegen sind der Kompressor und Sekundärkreis der Wärmepumpenanlage sowie der Heizkreislauf in Fig.7 weggelassen. In Fig.7 ist lediglich der Betrieb an warmen Tagen unter Verwendung von Sonnenkollektoren dargestellt. Statt der Sonnenkollektoren 44 können auch reine Luft-Wärme-Tauscher eingesetzt werden, die jedoch nicht so effektiv sind wie die Sonnenkollektoren

- 13 -

Ideal ist eine Kombination von Luft-Wärme-Tauschern
und Sonnenkollektoren, denn auch an bewölkten Tagen
kann eine hohe Lufttemperatur herrschen, die zur "Aufheizung" des Erdreichs genutzt werden kann.

- 14 -

Patentansprüche

1. Erdkollektor für Wärmepumpen, gekennzeichnet durch die Verwendung von mindestens einem etwa vertikal ins Erdreich getriebenen, plattenförmigen Wärmetauscherelement (12), an dem zur Zu- und Ableitung eines Wärmetauschermediums mindestens eine Rohrleitung (10) oder dergleichen angebracht ist, die sich im wesentlichen über die gesamte Länge des Wärmetauscherelementes (12) erstreckt.

2. Erdkollektor nach Anspruch 1, dadurch gekennzeichnet, daß als Wärmetauscherelement ein Tafelprofil dient.

3. Erdkollektor nach Anspruch 1 oder 2, dadurch gekennzeichnet, daß die Rohrleitung (10) U-förmig gebogen ist und an einer Flachseite des Tafelprofils befestigt ist.

4. Erdkollektor nach einem der Ansprüche 1 bis 3, dadurch gekennzeichnet, daß die Rohranschlüsse (14, 16) der Rohrleitung (10) jeweils am oberen Ende eines jeden Wärmetauscherelements (12) angeordnet sind, wenn dieses ins Erdreich getrieben ist, und daß die Rohranschlüsse (14, 16) Schraubanschlüsse sind.

5. Erdkollektor nach einem oder mehreren der Ansprüche 1 bis 4, dadurch gekennzeichnet, daß das Wärmetauscherelement (12) am unteren Ende mit einer Schneide (18, 19) versehen ist.

6. Erdkollektor nach Anspruch 5, dadurch gekennzeichnet, daß die Schneide (18, 19) zumindest an der Seite des Tafelprofils, an der die Rohrleitung (10) befestigt ist, soweit über die Tafelprofiloberfläche vorsteht, wie die Rohrleitung sich über die Tafelprofiloberfläche erhebt.

7. Erdkollektor nach einem oder mehreren der Ansprüche 1 bis 6, dadurch gekennzeichnet, daß die Rohrleitung (10) am Tafelprofil durch mindestens eine sich über die gesamte Rohrlänge erstreckende Schweißnaht befestigt ist, wobei die Schweißnaht als Wärmebrücke dient.

8. Erdkollektor nach einem der Ansprüche 1 bis 7, dadurch gekennzeichnet, daß die Rohrleitung (10) in den inneren Ecken des Tafelprofils an diesem befestigt ist, so daß eine größere Kontaktfläche und damit eine bessere Wärmeleitung zwischen Rohr und Tafelprofil erzielt werden.

9. Erdkollektor nach Anspruch 1, dadurch gekennzeichnet, daß als Wärmetauscherelement ein vom Wärmetauschermedium durchströmtes Rohr mit diametral angeordneten Flossen dient.

10. Erdkollektor nach Anspruch 1, dadurch gekennzeichnet, daß das Wärmetauscherelement (12) als U-Profil ausgebildet ist.

11. Erdkollektor nach Anspruch 1, dadurch gekennzeichnet, daß das Wärmetauscherelement (12) als I-Profil ausgebildet ist.

12. Verfahren zum Betriebe eines Erdkollektors für Wärmepumpen nach einem oder mehreren der Ansprüche 1 bis 11, dadurch gekennzeichnet, daß an kalten Tagen in die Wärmetauscherelemente ein Wärmetauschermedium mit bezogen auf die Temperatur des Erdreichs niedrigerer Temperatur und an wärmeren Tagen ein Wärmetauschermedium höherer Temperatur eingeleitet wird, wobei die Erwärmung des Wärmetauschermediums durch Überschußwärme erfolgt.

13. Verfahren nach Anspruch 12, dadurch gekennzeich net, daß an wärmeren bzw. Sonnentagen luft- oder durch unmittelbare Sonneneinwirkung (Sonne kollektoren) erwärmtes Wärmetauschermedium in di Wärmetauscherelemente eingeleitet wird.

14. Verfahren nach Anspruch 12 oder 13, dadurch geken zeichnet, daß die Einleitung von Wärmetauscher medium niedrigerer oder höherer Temperatur in d Wärmetauscherelemente in Abhängigkeit von der Außentemperatur bzw. Lufttemperatur erfolgt.

0019071

Fig. 1

Fig. 2

Fig. 3

Fig. 4

Fig. 6

Fig. 7

Fig. 5

0019071

Europäisches Patentamt

**EUROPÄISCHER RECHERCHENBERICHT**

Nummer der Anmeldung

EP 80 10 1746

| Kategorie | Kennzeichnung des Dokuments mit Angabe, soweit erforderlich, der maßgeblichen Teile | betrifft Anspruch |
|---|---|---|
| X | US - A - 4 106 555 (QUINTAL)  *Ganzes Dokument * | 1,3,4, 9,10, 12,13, 14 |
| | DE - A - 2 605 953 (FEIST)  *Seite 8 * | 1 |
| A | US - A - 2 513 373 (SPORN) | 1 |
| A | FR - A - 2 241 047 (HARRIS) | 1 |
| A | US - A - 2 428 876 (HAWKINS) | 1 |

### EINSCHLÄGIGE DOKUMENTE

**KLASSIFIKATION DER ANMELDUNG (Int Cl)**

F 24 J 3/02

**RECHERCHIERTE SACHGEBIETE (Int Cl)**

F 24 J

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie übereinstimmendes Dokument

Der vorliegende Recherchenbericht wurde für alle Patentansprüche erstellt

| Recherchenort. | Abschlußdatum der Recherche | Prüfer |
|---|---|---|
| Den Haag | 25-08-1980 | SMETS |

EPA form 1503.1   06.78